# EUROPÄISCHE PATENTSCHRIFT

(11) **EP 0 713 963 B1**
(45) Veröffentlichungstag und Bekanntmachung des Hinweises auf die Patenterteilung: **25.06.1997**
(21) Anmeldenummer: 95117374.9
(22) Anmeldetag: 04.11.1995
(51) Int. Cl.: F02F 7/00, F16C 9/02

(54) **Lagerung für die Kurbelwelle einer Brennkraftmaschine mit unmittelbar angeflanschtem Schwungrad**
Crankshaft bearing for an internal combustion engine with directly mounted flywheel
Palier vilebrequin pour un moteur à combustion interne avec agencement de volant d'inertie direct

(30) Priorität: 15.11.1994 DE 4440709
(43) Veröffentlichungstag der Anmeldung: 29.05.1996
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Steininger, Christian, D-50733 Köln (DE); Becker, Josef, D-53819 Seelscheid (DE); Kronast, Michael, Dr., D-42855 Remscheid (DE)
(74) Vertreter: Messulam, Alec Moses

(56) Entgegenhaltungen:
- EP-A- 0 236 831
- DE-A- 3 309 792
- DE-C- 4 330 565
- GB-A- 2 237 337
- US-A- 3 429 623

## Beschreibung

Die Erfindung bezieht sich auf eine Lagerung für die Kurbelwelle einer Brennkraftmaschine mit unmittelbar angeflanschtem Schwungrad, der im Oberbegriff des Patentanspruches 1 erläuterten Art.

Aus der DE-OS 25 02 032 ist eine Lagerung für die Kurbelwelle einer Brennkraftmaschine bekannt, bei der die Kurbelwelle an dem dem Schwungrad benachbart liegenden Kurbelwellenlager mit beidseitig angeordneten Axialgleitlagern versehen ist, um Axialkräfte, die vom Schwungrad herkommen, abzustützen.

Die bekannte Kurbelwellenlagerung weist den Nachteil auf, daß sie infolge des bei Axialgleitlagerungen vorhandenen Spieles die durch die Biegeschwingungen der Kurbelwelle auftretenden Axialkräfte nicht abstützen kann. Das durch diese Biegeschwingungen der Kurbelwelle hervorgerufene Taumeln des Schwungrades kann somit nicht wesentlich verringert werden.

Die Aufgabe der Erfindung ist es, eine Kurbelwellenlagerung für Brennkraftmaschinen der im Oberbegriff des Patentanspruches 1 erläuterten Art derart zu verbessern, daß im normalen Betriebsbereich der Brennkraftmaschine die an der Kurbelwelle durch Biegeschwingungen auftretenden Axialkräfte derart sicher abgestützt werden, daß sie nicht mehr nennenswert zum Taumeln des Schwungrades beitragen können.

Das Taumeln des Schwungrades ist insbesondere deshalb unerwünscht, weil sich durch die Übertragung der Taumelbewegung auf die Gesamtstruktur von Brennkraftmaschine/Getriebeeinheit eine Biegeschwingung des Antriebsstranges ergibt, wodurch störende Schwingungsgeräusche im Fahrzeug hervorgerufen werden.

Aus der DE-PS 32 06 837 ist eine Lagerung für ein Schwungrad einer Brennkraftmaschine bekannt, bei der das Schwungrad nur mehr mittelbar, über ein drehelastisches Zwischenstück mit der Kurbelwelle verbunden ist und für sich über eigene Lager an einen Zwischenflansch abgestützt ist.

Diese Lagerung kann zwar die Übertragung von Längs- und Drehschwingungen der Kurbelwelle auf das Schwungrad unterbinden, der bauliche Aufwand ist jedoch entsprechend hoch.

Die Aufgabe der Erfindung ist es, eine Lagerung für die Kurbelwelle einer Brennkraftmaschine mit unmittelbar angeflanschtem Schwungrad, der im Oberbegriff des Patentanspruches 1 erläuterten Art derart zu verbessern, daß mit geringem Bauaufwand eine Verringerung der Biegeschwingungen der Kurbelwelle und der damit einhergehenden Taumelbewegungen des Schwungrades erreicht wird.

Gemäß der Erfindung wird diese Aufgabe gelöst, indem bei einer Lagerung für die Kurbelwelle einer Brennkraftmaschine, mit unmittelbar angeflanschtem Schwungrad, der im Oberbegriff des Patentanspruches 1 erläuterten Art, die im Kennzeichenteil des Patentanspruches 1 aufgezeigten Merkmale angewendet werden.

In den Ansprüchen 2 bis 4 sind weitere bevorzugte Ausführungsformen der Erfindung erläutert.

Die Erfindung wird anhand eines in der beiliegenden Zeichnung gezeigten Ausführungsbeispieles erläutert. Es zeigt:

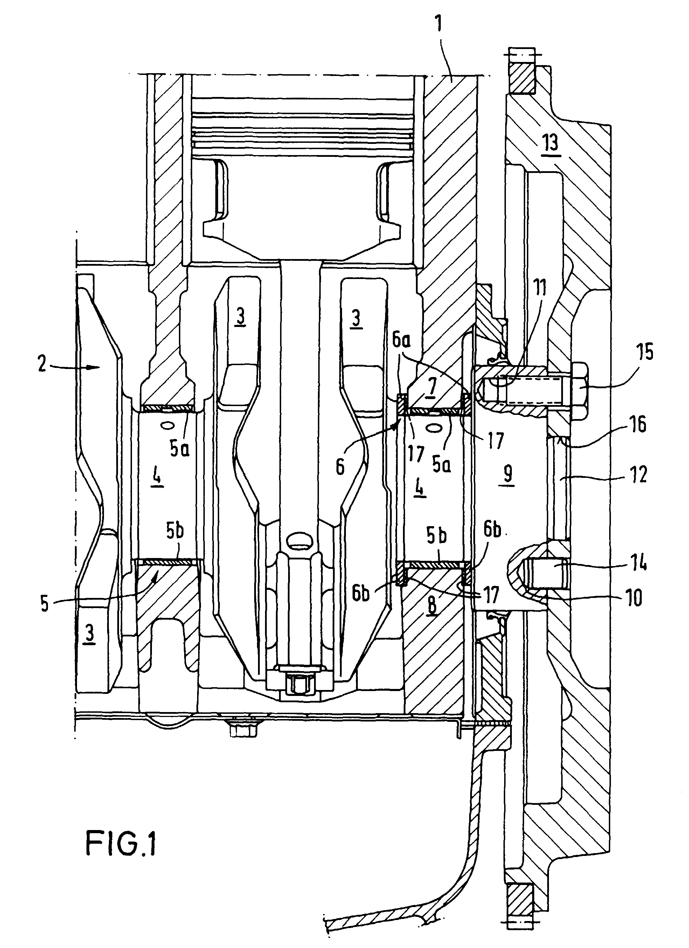

- Fig. 1: einen vertikalen Schnitt durch eine Lagerung für eine Kurbelwelle einer Brennkraftmaschine mit unmittelbar angeflanschtem Schwungrad gemäß der Erfindung;

In Fig. 1 ist in einem Motorengehäuse 1 eine Kurbelwelle 2 an ihren zwischen Kurbelwangen 3 liegenden Hauptlagerzapfen 4 über aus zwei Halbschalen 5a und 5b bestehenden Radialgleitlager 5 drehbar gelagert.

Eines der Radialgleitlager 5 für die Lagerung der Kurbelwelle 2 ist normalerweise zu beiden Seiten mit aus zwei Halbkreisbögen 6a und 6b bestehenden Axialgleitlagern 6 zur Abstützung von Längsbewegungen der Kurbelwelle 2 versehen. Wie an sich bekannt, kann die Anordnung der beiden Axialgleitlager 6 am letzten Lagersteg 7 des Motorgehäuses 1 und dem letzten Lagerdeckel 8 zwischen der letzten Kurbelkröpfung 3 und dem Kurbelwellenflansch 9 angeordnet sein.

Das letzte Radialgleitlager 5 kann hierbei in bekannter Weise mit den zu beiden Seiten des Lagersteges 7 und des Lagerdeckels 8 vorgesehenen Axialgleitlagern 6 zu einer Einbaueinheit verrastet sein, wodurch sich die Montage vereinfacht.

Der das Ende der Kurbelwelle 2 bildende Kurbelwellenflansch 9 weist eine Paßbohrungen 10 und eine Gewindebohrungen 11 sowie einen Zentrieransatz 12 auf, über die ein Schwungrad 13 mittels Paßstiften 14, Befestigungsschrauben 15 und einer Zentrieröffnung 16 befestigt wird.

Bis hierher entspricht die Lagerung für die Kurbelwelle einer Brennkraftmaschine mit unmittelbar angeflanschtem Schwungrad der an sich bekannten Bauart.

Gemäß der Erfindung sind die zu beiden Seiten des letzten Steges 7 im Motorgehäuse 1 und des Lagerdeckels 8 angeordneten Axialgleitlager 6 mit einer partiell oder vollflächigen Elastomerschicht 17 von ca. 0.5 bis 1,5 mm Dicke versehen, wobei die thermische Ausdehnung des Elastomers im Zusammenhang mit den Ausdehnungskoeffizienten der Kurbelwelle 2 und des Motorgehäuses 1 derart abgestimmt wird, daß sich bei Betriebstemperatur der Brennkraftmaschine eine temperaturabhängige Vorspannung der Axiallagerung im Kurbelwellenlager ergibt.

Dadurch werden Biegeschwingungen der Kurbelwelle 2 und damit Taumelbewegungen des Kurbelwellenflansches 9, die Taumelbewegungen des Schwungrades 13 bewirken, weitgehend vermieden.

Selbstverständlich kann anstelle einer Elastomerschicht auch ein anderes Federelement und ggf. eine besondere Verbundschicht angeordnet werden, deren thermische Ausdehnung entsprechend den Erfordernissen ausgewählt wird.

## Patentansprüche

1. Lagerung für die Kurbelwelle (2) einer Brennkraftmaschine mit unmittelbar angeflanschtem Schwungrad (13) und einem dem Schwungrad (13) benachbart liegenden Kurbelwellenlager mit zur Radiallagerung angeordneten Radialgleitlager (5) und mit zusätzlichen, beidseitigen Axialgleitlagern (6) zur Abstützung von Axialkräften, die auf das Schwungrad (13) einwirken,
**dadurch gekennzeichnet**, daß
- die beidseitig angeordneten Axialgleitlager (6) als temperaturabhängig vorgespannte Axialgleitlager (6) ausgebildet sind.

2. Lagerung für die Kurbelwelle einer Brennkraftmaschine nach Anspruch 1,
**dadurch gekennzeichnet**, daß
- die vorgespannten Axialgleitlager (6) durch eine Abstützung mittels einer Elastomerschicht (18) im Bereich von ca. 0.5 bis 1,5 mm vorgespannt sind, wobei die thermische Ausdehnung der Elastomerschicht (18) den unterschiedlichen thermischen Ausdehnungskoeffizienten der Kurbelwelle (2) und des Motorengehäuses (1) entsprechend ausgewählt wird.

3. Lagerung für die Kurbelwelle einer Brennkraftmaschine nach Anspruch 1,
**dadurch gekennzeichnet**, daß
- die vorgespannten Axialgleitlager (6) durch eine Verbund-Materialschicht gebildet werden, deren thermische Ausdehnung entsprechend den unterschiedlichen Ausdehnungskoeffizienten der Kurbelwelle (2) und des Motorengehäuses (1) entsprechend ausgewählt wird.

4. Lagerung für die Kurbelwelle einer Brennkraftmaschine nach Anspruch 2,
**dadurch gekennzeichnet**, daß
- die Elastomerschicht (18) partiell oder vollflächig aufgebracht ist.

## Claims

1. A mounting for the crankshaft (2) of an internal combustion engine having a directly flange-mounted flywheel (13) and a crankshaft bearing located adjacent the flywheel (13) which comprises sliding radial bearings (5) for radial bearing purposes and additional sliding thrust bearings (6) on both sides to sustain axial forces which act on the flywheel (13),
characterised in that
- the sliding thrust bearings (6) on both sides are in the form of temperature-dependently prestressed sliding thrust bearings (6).

2. A mounting for the crankshaft of an internal combustion engine according to claim 1,
characterised in that
- the prestressed sliding thrust bearings (6) are prestressed through support by means of an elastomer layer (18) in the range of about 0.5 to 1.5 mm, the thermal expansion of the elastomer layer (18) being selected to correspond to the different coefficients of thermal expansion of the crankshaft (2) and of the engine housing (1).

3. A mounting for the crankshaft of an internal combustion engine according to claim 1,
characterised in that
- the prestressed sliding thrust bearings (6) are in the form of a composite material layer, the thermal expansion of which is selected according to the different coefficients of thermal expansion of the crankshaft (2) and of the engine housing (1).

4. A mounting for the crankshaft of an internal combustion engine according to claim 2,
characterised in that
- the elastomer layer (18) is applied over part or all of the surface.

## Revendications

1. Palier pour le vilebrequin (2) d'un moteur à combustion interne avec bridage direct du volant d'inertie (13), et avec un palier de vilebrequin situé au voisinage du volant d'inertie (13), avec des paliers lisses radiaux (5) disposés pour la suspension radiale et avec des paliers lisses axiaux supplémentaires (6) de part et d'autre, pour soutenir les forces axiales qui agissent sur le volant d'inertie (13), **caractérisé** en ce que les paliers lisses axiaux (6) disposés de part et d'autre sont réalisés sous la forme de paliers lisses axiaux (6) précontraints en fonction de la température.

2. Palier pour le vilebrequin d'un moteur à combustion interne selon la revendication 1, **caractérisé** en ce que les paliers lisses axiaux précontraints (6) sont précontraints par un soutien au moyen d'une couche d'élastomère (17) d'environ 0,5 à 1,5 mm d'épaisseur, la dilatation thermique de la couche d'élastomère (17) étant choisie de façon correspondante aux coefficients différents de dilatation thermique du vilebrequin (2) et du carter moteur (1).

3. Palier pour le vilebrequin d'un moteur à combustion interne selon la revendication 1, **caractérisé** en ce que les paliers lisses axiaux précontraints (6) sont formés par une couche de matériau composite dont la dilatation thermique est choisie de façon correspondante aux coefficients différents de dilatation thermique du vilebrequin (2) et du carter moteur (1).

4. Palier pour le vilebrequin d'un moteur à combustion interne selon la revendication 2, **caractérisé** en ce que la couche d'élastomère (18) est appliquée de façon partielle ou sur toute la surface.
